# EUROPÄISCHE PATENTSCHRIFT

(11) **EP 0 587 609 B1**
(45) Veröffentlichungstag und Bekanntmachung des Hinweises auf die Patenterteilung: **26.03.1997**
(21) Anmeldenummer: 92910590.6
(22) Anmeldetag: 02.06.1992
(51) Int. Cl.: G01N 21/63, G01N 21/71

(54) **VERFAHREN UND VORRICHTUNG FÜR DIE EMISSIONSSPEKTROSKOPIE**
PROCESS AND DEVICE FOR EMISSION SPECTROSCOPY
PROCEDE ET DISPOSITIF POUR LA SPECTROSCOPIE D'EMISSION

(30) Priorität: 06.06.1991 DE 4118518
(43) Veröffentlichungstag der Anmeldung: 23.03.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: NOLL, Reinhard, D-5100 Aachen (DE)
(74) Vertreter: Eichler, Peter, Dipl.-Ing.
(86) Internationale Anmeldenummer: DE9200447
(87) Internationale Veröffentlichungsnummer: WO9221957

(56) Entgegenhaltungen:
- WO-A-86/00552
- DE-A- 3 413 589
- US-A- 4 690 558
- APPLIED SPECTROSCOPY, Bd. 42, Nr. 2, Februar 1988, Baltimore US, Seiten 277-280; M.A. MARKS et al.: 'An Emission-Based Feedback System for Stabilizing an Inductively Coupled Plasma'

## Beschreibung

Die Erfindung bezieht sich auf ein Verfahren für die Emissionsspektroskopie, insbesondere die Laser-Emissionsspektroskopie, bei dem die von laserinduziertem Plasma des zu analysierenden Werkstoffs emittierte Strahlung von einem Spektrometer zerlegt und zumindest ein Teil des ermittelten Spektrums einer Verarbeitungseinrichtung zur Elementanalyse transferiert wird.

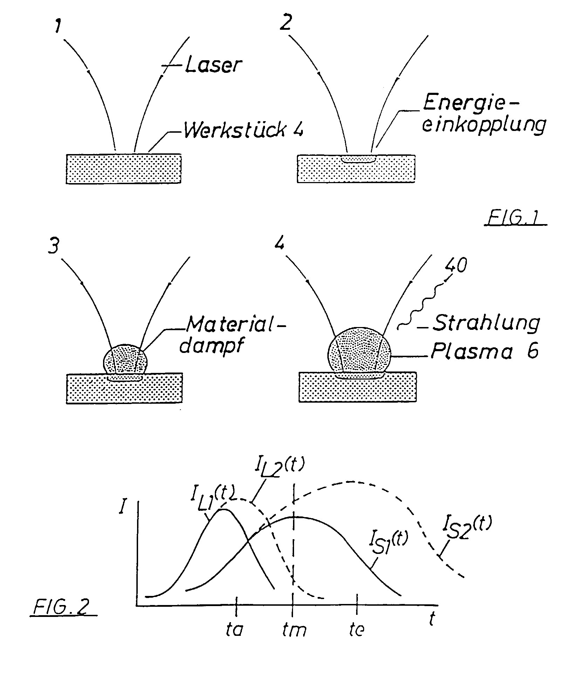

Die Emissionsspektroskopie, wie die Laser-Emissionsspektroskopie oder auch die Funken-Emissionsspektroskopie dient der Werkstoffanalyse, wobei die Laserstrahlung oder die Funken dazu benutzt werden, geringfügige Mengen des Werkstoffs zu verdampfen, damit der Werkstoffdampf analysiert werden kann. Gemäß Fig.1 (1) wird Laserstrahlung auf das zu untersuchende Werkstück fokussiert. Aufgrund der natürlichen Absorption der Laserstrahlung durch das Werkstück 4 erfolgt eine Energieeinkopplung gemäß Fig.1 (2) in einem lokalen Bereich, von dem aus ein Teil des Materials gemäß Fig.1 (3) verdampft. Die verdampfte Werkstoffmenge hängt von der Energie, der Leistung und Leistungsdichte, der örtlichen Leistungsverteilung und der Wellenlänge der Laserstrahlung ab. Das Entstehen und der Zustand des Werkstoffdampfes werden zudem von den Werkstoffeigenschaften selbst und von der Umgebungsatmosphäre beeinflußt. Die Laserstrahlung wird in den Werkstoffdampf eingekoppelt, so daß dieser in einem Plasmazustand oder in einen plasmaähnlichen Zustand überführt wird. Infolge der Energieeinkopplung werden die Werkstoffkomponenten des Plasmas zur Strahlungsemission angeregt. Die dabei emittierte Strahlung 40 gemäß Fig.1 (4) ist charakteristisch für die Zusammensetzung des zu untersuchenden Werkstoffs.

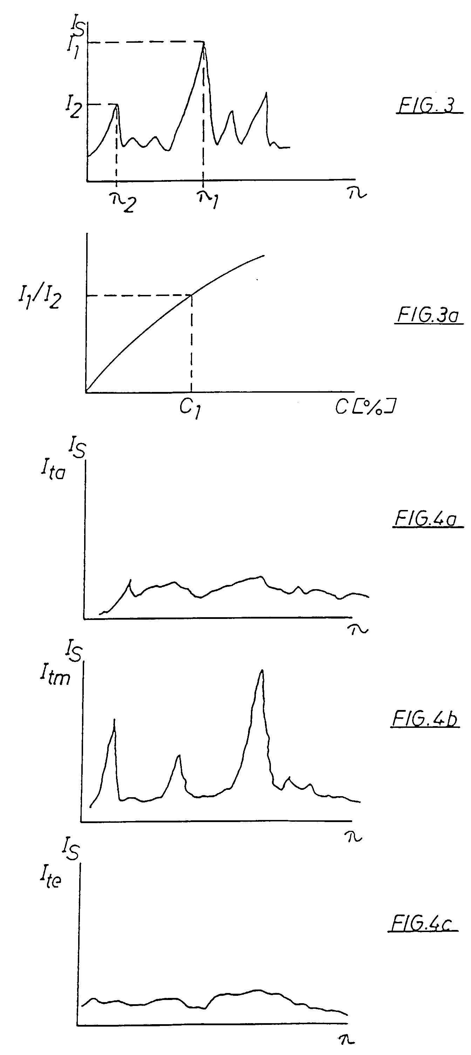

Die vom Plasma 6 emittierte Strahlung 40 wird einem Spektrometer zugeführt und dort spektral zerlegt. Es ergibt sich beispielsweise die Abhängigkeit der Strahlungsintensität Iₛ=f(λ) gemäß Fig.3. Diese Information wird einer Verarbeitungseinrichtung zugeleitet, die beispielsweise mit einem Rechner und einem Ausgabegerät versehen ist. In der Verarbeitungseinrichtung werden Intensitäts- bzw. Linienverhältnisse berechnet, um über Kalibrierkurven Elementkonzentrationen des Werkstoffs zu bestimmen. Beispielsweise wird die Intensität I₁ einer Emissionslinie λ₁ ins Verhältnis zur Intensität I₂ einer Emissionslinie λ₂ gesetzt, wobei die Emissionslinie λ₂ als Referenzlinie dient und beispielsweise von dem Element stammt, das im untersuchten Werkstoff am häufigsten vorkommt. Mit Hilfe des Verhältnisses I₁/I₂ kann dann anhand einer Kalibrierkurve I₁/I₂=f(C) gemäß Fig.3a der prozentuale Gehalt C₁ eines ersten Elements des gesamten Werkstoffs bestimmt werden.

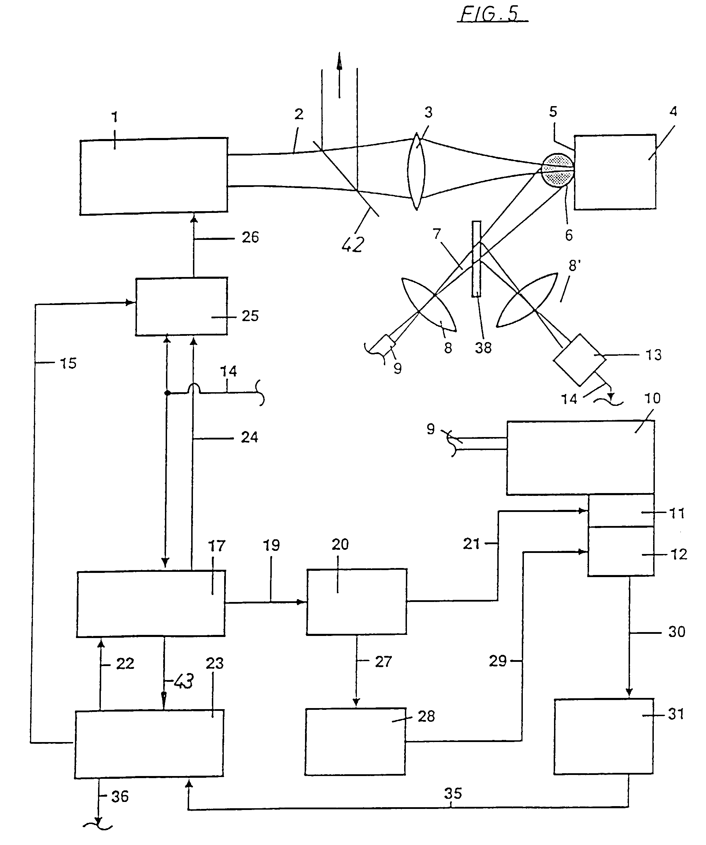

Derartige Werkstoffanalysen mit Laserstrahlung sind berührungslose Verfahren, die praktisch ohne Probenahme auskommen. Mit schnellen Komponenten durchgeführt, bieten sie die Möglichkeit hoher Meßgeschwindigkeit. Sie können daher in Ver- und Bearbeitungslinien integriert werden, ohne den Werkstückfluß durch Probenahme und Probetransport zur Analyseeinrichtung zu beeinträchtigen. Es lassen sich Element-und Multielementanalysen durchführen. Durch on-line-Analysen lassen sich beispielsweise die Herstellungsprozesse von Werkstoffen in qualitativer und quantitativer Hinsicht überwachen. Darüber hinaus ist es aber auch möglich, in die Herstellungsprozesse von Werkstücken steuernd einzugreifen, wenn hohe Meßgeschwindigkeiten eine on-line-Analyse ermöglichen. Beispielsweise können Eingangskontrollen von Rohstoffen durchgeführt werden, es können Identitätsprüfungen von Werkstücken durchgeführt werden und es ist möglich, Materialgemische und Werkstücke zu sortieren. Diesen grundsätzlichen Gegebenheiten steht jedoch hindernd entgegen, daß die Meßgenauigkeit und die Reproduzierbarkeit der bekannten Analyseverfahren gering sind. Die Einsatzmöglichkeiten dieser Verfahren sind daher entsprechend beschränkt. Ursache dafür ist, daß der sich zeitlich ändernde Zustand des Plasmas nicht genügend berücksichtigt wird. Fig.2 zeigt in einer prinzipiellen Darstellung I=f(t) den zeitlichen Zusammenhang zwischen dem Verlauf der Intensität der Laserstrahlung und dem Verlauf der Intensität der emittierten Strahlung des Plasmas. Einer Laserstrahlungsintensität I_{L1}(t) soll beispielsweise die Intensität I_{S1}(t) entsprechen. Es ist ersichtlich, daß die emittierte Strahlung verzögert auftritt, weil sich das Plasma unter der Wirkung der Laserstrahlung erst aufbauen muß. Verhielte sich die Laserstrahlung hinsichtlich ihres Intensitätsverlaufs gemäß I_{L2}(t), so ergäbe sich ein Verlauf für die Intensität der emittierten Plasmastrahlung gemäß I_{S2}(t). Die unterschiedlichen Intensitätsverläufe der emittierten Strahlung erklären sich dadurch, daß sich die Temperaturzustände, die für die Intensität der emittierten Strahlung verantwortlich sind, in Abhängigkeit von der eingestrahlten Energie und damit vom Impulsverlauf der Laserstrahlung verzögert ändern. Daher ist es von Bedeutung, daß der Zeitbereich oder der Zeitpunkt tₘ der Messung bzw. der Auswertung genau festgelegt wird. Denn zu diesem Zeitpunkt ist die Strahlungsemission optimal. Das ergibt sich aus den Fig.4a bis 4c, wo der Intensitätsverlauf I_{S}=f(λ) dargestellt ist, und zwar für die Zeitpunkte tₐ,tₘ und tₑ. Zum Zeitpunkt tₐ ist die Strahlungsintensität vergleichsweise gering, wie auch zum Zeitpunkt tₑ. Das ist in Übereinstimmung mit I_{S1}(t). Es ist erkennbar, daß die Emissionslinien nur schwach ausgebildet sind. Demgegenüber sind die Emissionslinien zum Zeitpunkt tₘ optimal ausgebildet und die Analyse gemäß Fig.3,3a kann mit maximaler Genauigkeit durchgeführt werden. Bei den bekannten Verfahren wird derartiges jedoch nur dadurch berücksichtigt, daß nach Beginn des Laserpulses oder eines den Laserpuls auslösenden Entladevorgangs eine feste Zeit eingestellt wird, so daß die zeitlich unterschiedliche Entwicklung von Plasmen nicht berücksichtigt wird. Bei den bekannten Vorrichtungen wird daher der optimale Zeitpunkt tₘ für unterschiedliche Plasmen nicht erreicht.

Aus der DE-A-34 13 589 ist eine Vorrichtung für die Laser-Emissionsspektroskopie bekannt, bei der ein Teil der von dem zu analysierenden Werkstoff emittierten Strahlung einer Fotodiode zugeführt wird, mit der ein Referenzsignal erzeugt wird, das einem Signalprozessor zugeleitet wird. Hier dient das Signal der Fotodiode, die nur die integrale Strahlungsintensität des Plasmas mißt, der Normierung des mit dem Spektrographen gewonnenen Signalspektrums. Eine zeitlich unterschiedliche Entwicklung von Plasmen und damit eine Steigerung der Meßgenauigkeit sowie eine Herabsetzung der Meßzeiten erfolgt dabei nicht.

Aus der US-A-4 690 558 ist ein Verfahren für die Laser-Emissionsspektroskopie bekannt, bei der die Genauigkeit der Analyse dadurch gesteigert werden soll, daß eine GAUSS-Verteilung des TEM₀₀-Mode verwendet wird. Des weiteren soll eine Messung der Spektrallinienintensität nur durchgeführt werden, wenn das Intensitätsverhältnis eines Paares vorbestimmter Spektrallinien des vom Prüfling emittierten Lichts innerhalb eines vorbestimmten Bereichs ist. Infolgedessen werden zwar die beschriebenen Genauigkeitsfehler verringert, es findet jedoch keine Reduzierung der Meßzeiten statt. Eine Beeinflussung der Arbeitsweise des Lasers wird nicht beschrieben.

Aus der WO-A-86/00552 ist eine Einrichtung zum Bearbeiten von Werkstücken mittels Laserstrahl durch Aufbau eines in Grenzen zu haltenden Plasmas bekannt. Die Einrichtung besitzt Diagnostikmittel, die der ständigen Erfassung der Vorgänge in der Bearbeitungszone des Werkstücks dienen und Plasmaparameter ermitteln. Mit diesen Plasmaparametern wird die Laserintensität in vorbestimmten Grenzen gehalten, um eine Plasmadetonation zu verhindern. Eine spektographische quantitative Werkstoffanalyse findet nicht statt.

Es liegt der Erfindung die Aufgabe zugrunde, ein Verfahren der eingangs genannten Art so zu verbessern, daß Meßgenauigkeit und Reduzierbarkeit insbesondere für quantitative Analysen gesteigert und Meßzeiten herabgesetzt werden.

Diese Aufgabe wird dadurch gelöst, daß eine Beeinflussung der Intensität der plasmabildenden Laserstrahlung zur Erzeugung definierter Plasmazustände in Abhängigkeit von zumindest einem emissionsbeeinflussenden Parameter erfolgt, der während der Plasmabildung gemessen wird, und daß der Transfer des ermittelten Spektrums oder eines Teils desselben zur Verarbeitungseinrichtung durchgeführt wird, sofern sich der gemessene Plasmaparameter innerhalb eines vorbestimmten Toleranzbereichs befindet.

Für die Erfindung ist die Erkenntnis von Bedeutung, daß emissionsbeeinflussende Parameter, also Plasmaparameter, während des Meßverfahrens berücksichtigt werden müssen. Zumindest ein solcher Plasmaparameter muß während der Plasmabildung gemessen werden, so daß in Abhängigkeit vom Meßergebnis der Transfer des ermittelten Spektrums zur Verarbeitungseinrichtung durchgeführt werden kann, damit die Analyse also auf der Basis einer Strahlungsemission gemäß Fig.4b für unterschiedliche Plasmen oder zeitlich unterschiedliche Entwicklungen von Plasmen zum optimalen Zeitpunkt tₘ erfolgt. Daher ergeben sich eine vergleichsweise hohe Meßgenauigkeit und Reproduzierbarkeit bei einer minimalen Anzahl laserinduzierter Plasmen. Aufgrund geringer Meßzeiten kommt die online-Anwendung des Verfahrens bei Schnellstanalysen infrage, und zwar auch bei hohen Nachweisempfindlichkeiten bis in den ppm-Bereich hinein.

Da der Plasmaparameter in Beziehung zu einem vorbestimmten Toleranzbereich gesetzt wird, ist es möglich, das Verfahren auf unterschiedliche Elementeigenschaften des zu analysierenden Werkstoffs abzustimmen, beispielsweise auf unterschiedliche Verdampfungstemperaturen der Elemente des Werkstoffs. Es kann beispielsweise berücksichtigt werden, daß ein erstes Element zwar bereits eine Strahlungsemission gemäß Fig.4b hat, so daß die gewünschte Analyse optimal durchgeführt werden könnte, ein zweites Element des Werkstoffs jedoch noch nicht, sondern beispielsweise erst gemäß Fig.4a Strahlung emittiert, weil es eine höhere Verdampfungstemperatur hat. Dementsprechend könnte das Verfahren unter Ausnutzung desselben laserinduzierten Plasmas so ausgeführt werden, daß das erste Element zu einem Zeitpunkt tₘ₁ und das zweite Element zu einem Zeitpunkt tₘ₂ analysiert wird, also jeweils zum optimalen Zeitpunkt. Mit dem Verfahren ist daher eine zeitschnelle Multielementanalyse möglich, bei der die Nachweisempfindlichkeiten für die einzelnen Elemente optimiert werden. Bei dem Verfahren kann daher bis in den für die Sekundärmetallurgie erforderlichen ppm-Bereich hinein gearbeitet werden.

Die wirtschaftliche Bedeutung des erfindungsgemäßen Verfahrens ergibt sich ohne weiteres beispielsweise daraus, daß eine Multielementanalyse bei der Herstellung von Stahl auch heute noch durch Probenahme erfolgt, wobei die Probe transportiert und nach Erkalten analysiert werden muß, so daß sich dementsprechende minutenlange Stillstandszeiten bei der Stahlherstellung ergeben, die zu entsprechenden Energieverlusten durch Beheizung großer Schmelzemengen führen.

Vorteilhaft ist für das erfindungsgemäße Verfahren außerdem, daß nicht nur ein einziger Plasmaparameter berücksichtigt werden kann, sondern daß grundsätzlich alle für die Strahlungsemission maßgeblichen Parameter bei dem Verfahren berücksichtigt werden können. Darüber hinaus ergibt sich eine geringere Empfindlichkeit des Verfahrens gegen Änderungen der Fokussierung, des Laserstrahls und von Umgebungsbedingungen.

Von besonderer Bedeutung als emissionsbeeinflussender Parameter ist die Plasmatemperatur zu nennen. Dementsprechend wird das Verfahren so durchgeführt, daß als Plasmaparameter die Plasmatemperatur verwendet wird.

Das laserinduzierte Plasma ist beispielsweise in Abhängigkeit von der Werkstoffzusammensetzung und dem Umgebungsdruck unterschiedlich dicht, was ebenfalls die emittierte Strahlung beeinflußt. In weiterer Ausgestaltung der Erfindung wird das Verfahren daher so durchgeführt, daß ergänzend zur Plasmatemperatur auch die Plasmadichte als Plasmaparameter verwendet wird.

Zur Anpassung des Verfahrens an unterschiedliche Analyseaufgaben wird es so durchgeführt, daß der Maximalwert eines Parameters eines impulsweise induzierten Plasmas gemessen wird, daß dieser Maximalwert als Ist-Wert mit einem Sollwertbereich verglichen wird, und daß die Energie des nächstfolgenden Laserpulses erhöht oder gesenkt wird, wenn der Maximalwert unterhalb oder oberhalb des Sollwertbereichs liegt. Es kann mit einer dem Sollwertbereich entsprechenden Genauigkeit erreicht werden, daß das induzierte Plasma einen definierten Zustand hat und die von diesem Plasma emittierte Strahlung reproduzierbar ausgewertet werden kann.

Darüber hinaus kann das Verfahren auch so durchgeführt werden, daß eine kontinuierliche Messung des Parameterverlaufs eines impulsweise induzierten Plasmas erfolgt, daß dieser Parameteristverlauf kontinuierlich mit einem Parametersollverlauf verglichen wird, und daß im Abweichungsfall differenzbedingte Regelgrößen erzeugt und für eine kontinuierliche Regelung der Energie des Laserstrahls während der Pulserzeugung herangezogen werden. Eine derartige Regelung der Energie des Laserstrahls ermöglicht eine weitere Verbesserung des Verfahrens im Sinne der Erzielung definierter Plasmazustände.

Sowohl bei dem vorbeschriebenen Steuerungsverfahren, als auch bei dem vorbeschriebenen Regelungsverfahren können Anpassungen des Verfahrens an den zu analysierenden Werkstoff zur Optimierung des Meßergebnisses dadurch erreicht werden, daß der Sollwertbereich und/oder der Parametersollverlauf spezifisch für ein zu analysierendes Element oder für eine Elementengruppe vorgegeben werden.

Um möglichst genaue Analyseergebnisse zu erzielen, wird so verfahren, daß dem Spektrometer und dem Parametersensor emittierte Strahlung aus demselben Quellbereich des Plasmas zugeführt wird.

Infolge der gesteigerten Meßgenauigkeit und der erheblichen Meßgeschwindigkeit kann so verfahren werden, daß dem Ergebnis der plasmaparameterabhängig durchgeführten Elementanalyse entsprechend eine Prozeßsteuerung des zugehörigen Werkstücks erfolgt.

Das Verfahren kann so durchgeführt werden, daß die Emissionsintensität einer Anzahl vorbestimmter Emissionslinien und auch mindestens ein Plasmaparameter in Abhängigkeit von der Zeit registriert werden, bevor der Transfer zur Verarbeitungseinrichtung in Abhängigkeit von dem vorbestimmten Toleranzbereich erfolgt. Es ist also nicht erforderlich, das gesamte Spektrum eines einzigen Zeitpunkts oder eines kleinen Zeitbereichs zu erfassen und auszuwerten, sondern es werden vorbestimmte Emissionslinien, nämlich die für die Analyse interessanten, über den gesamten Verlauf der Plasmabildung erfaßt. Damit wird sichergestellt, daß für diese Emissionslinien sämtliche auswertbaren Plasmazustände erfaßt werden, also solche, bei denen sich der Plasmaparameter innerhalb des vorbestimmten Toleranzbereichs befindet.

Die Erfindung bezieht sich auch auf eine Vorrichtung zur Durchführung der Verfahren. Aus der DE-A-34 13 559 ist eine Vorrichtung mit den Merkmalen des Oberbegriffs des Anspruchs 10 bekannt. Mit dieser Vorrichtung ist es jedoch nicht möglich, zur Auswertung der Meßergebnisse definierte Plasmazustände zu erreichen. Die Vorrichtung wird daher entsprechend den kennzeichnenden Merkmalen des Anspruchs 10 ausgebildet. Damit wird erreicht, daß das Plasma optimal beobachtet werden kann, insbesondere bezüglich desselben Quellbereichs.

Zur Auswertung insbesondere des gesamten ermittelten Spektrums ist die Vorrichtung so ausgebildet, daß der Plasmaparametersensor an eine Vergleichseinheit angeschlossen ist, die Werte des Toleranzbereichs von der Zentraleinheit vorgegeben erhält und mit der eine zwischen dem Spektrometer und der Verarbeitungseinrichtung angeordnete Transfereinheit steuerbar ist.

Die Auswertung einer oder mehrerer Emissionslinien des ermittelten Spektrums wird dadurch ermöglicht, daß der Plasmaparametersensor an einen Speicher angeschlossen ist, der mit dem Spektrometer über eine Schlitzblende mit nachgeordnetem diskreten jeweils auf eine einzige Emissionslinie oder ein Untergrundsignal des Spektrums abgestimmten Detektor gekoppelt ist und der in Transferverbindung mit der Verarbeitungseinrichtung steht, die die Werte des Toleranzbereichs von der Zentraleinheit vorgegeben erhält.

Die Erfindung wird anhand der Zeichnung erläutert. Es zeigt:
- Fig. 1: eine Darstellung zur Entwicklung laserinduzierter Plasmastrahlung,
- Fig.2: eine diagrammatische Darstellung I=f(t) für den Verlauf der Intensität bei einem Laserimpuls und einem impulsweise induziertem Plasma,
- Fig.3: den diagrammatischen Verlauf der Intensität I_{S}=f(λ), für einen Werkstoff,
- Fig.3a: eine Kalibrierkurve,
- Fig.4a bis 4c: diagrammatische Verläufe I_{S}=f(λ) für unterschiedliche Zeitpunkte bei impulsweise laserinduziertem Plasma,
- Fig.5: eine schematische Darstellung einer Vorrichtung für die Laser-Emissionsspektroskopie in Verbindung mit einem Blockschaltbild zur Erläuterung des funktionellen Ablaufs,
- Fig.6: in einer Darstellung A die diagrammatische Abhängigkeit des Plasmaparameters der Temperatur T=f(t) und in einer Darstellung B die Abhängigkeit eines Signalverlaufs S_{T}=f(t) zur Steuerung des Transfers des ermittelten Spektrums zur Verarbeitungseinrichtung,
- Fig.7: eine Ergänzung des Blockschaltbilds der Fig.5 für den Fall der Berücksichtigung eines zweiten Plasmaparameters bei der Steuerung des Transfers des ermittelten Spektrums zur Bearbeitungseinrichtung,
- Fig.8: eine der Fig.6 entsprechende Abbildung für die zeitlichen Verläufe N=f(t) und S_{N}=f(t) für die Plasmadichte N(t) als zweiten Plasmaparameter,
- Fig.9: eine Darstellung zur Erläuterung der Steuerung des Transfers des ermittelten Spektrums zur Verarbeitungseinrichtung in Abhängigkeit von den beiden Plasmaparametern T(t) und N(t), und
- Fig.10: ein Blockschaltbild zur Erläuterung eines Verfahrens bei einem Transfer eines Teils des ermittelten Spektrums zur Verarbeitungseinrichtung.

Gemäß Fig.5 wird ein Meßobjekt 4 von einem Laser 1 mit Laserstrahlung 2 bestrahlt, die von einer Optik 3 fokussiert wird. An der Oberfläche 5 des Meßobjekts 4 entsteht ein Plasma 6, das mit einer Meßoptik 8 beobachtet wird, so daß die gemäß Fig.1 emittierte Strahlung 40 als Licht mit dem Strahlengang 7 auf einen Lichtwellenleiter 9 gelenkt wird, der das Licht zu einem Spektrometer 10 führt. Das im Spektrometer 10 zerlegte Spektrum wird unter Zwischenschaltung eines elektrooptischen Verschlusses 11 mit einem Detektor 12 registriert. Der Verschluß 11 und der Detektor 12 bilden eine zu steuernde Transfereinheit. Der Detektor 12 ist über eine Leitung 30 an eine Verarbeitungseinrichtung 31 angeschlossen. Die aus dem Detektor 12 ausgelesenen Daten werder in der Verarbeitungseinrichtung digitalisiert und die Spektren zur quantitativen Elementanalyse in herkömmlicher Forn verarbeitet. Die Ergebnisse der Verarbeitungseinrichtung 31 werden über die Verbindung 35 an die Zentraleinheit 23 weitergeleitet, die beispielsweise eine Anzeigevorrichtung aufweist, oder die über eine Leitung 36 z.B. Informationen für eine Prozeßsteuerung liefert, die auf eine Weiterverarbeitung des Meßobjekts 4 einwirken kann. Dieses Meßobjekt 4 kann beliebig sein, sofern mit Laserstrahlung 2 ein Plasma zu induzieren ist. Das Meßobjekt 4 kann also ein Gas, ein Dampf, ein Festkörper oder eine Flüssigkeit sein. In den Strahlengang 7 der Meßoptik 8 ist ein teildurchlässiger Spiegel 38 eingekoppelt, mit dem ein Teil des vom Plasma 6 emittierten Lichts mit einer Meßoptik 8 auf einen Plasmaparametersensor 13 gelenkt wird. Dieser Sensor 13 bzw. die Meßoptik 8 kann aber auch über einen Ausblendspiegel 42 mit vom Plasma 6 emittierter Strahlung 40 beaufschlagt werden, die zurück durch die Laseroptik 3 auf den Ausblendspiegel 42 gelangt, der für Laserstrahlung 2 durchlässig ist. In beiden Fällen wird der Sensor 13 mit emittierter Strahlung 40 aus demselben Quellbereich des Plasmas 6 beaufschlagt. Als Sensor, der einen Plasmaparameter ermitteln soll, wird beispielsweise ein Temperatursensor verwendet, der ein Temperatursignal T(t) des Plasmas 6 liefert. Der Temperatursensor wird beispielsweise so realisiert, daß zwei Wellenlängen eines Elements des Meßobjekts aus dem empfangenen Plasmalicht herausgefiltert werden und die jeweilige Strahlung mit einem Detektor registriert wird. Die vom Detektor registrierten Signale werden ins Verhältnis gesetzt und kennlinienkorrigiert. Hierdurch läßt sich eine Anpassung des Sensors 13 an die Meßaufgabe erreichen, beispielsweise ein bestimmtes Element des Meßobjekts quantitativ zu bestimmen. Im übrigen wird der Temperatursensor zweckmäßigerweise so ausgeführt, daß er den typischen Änderungszeiten eines laserinduzierten Plasmas folgen kann.

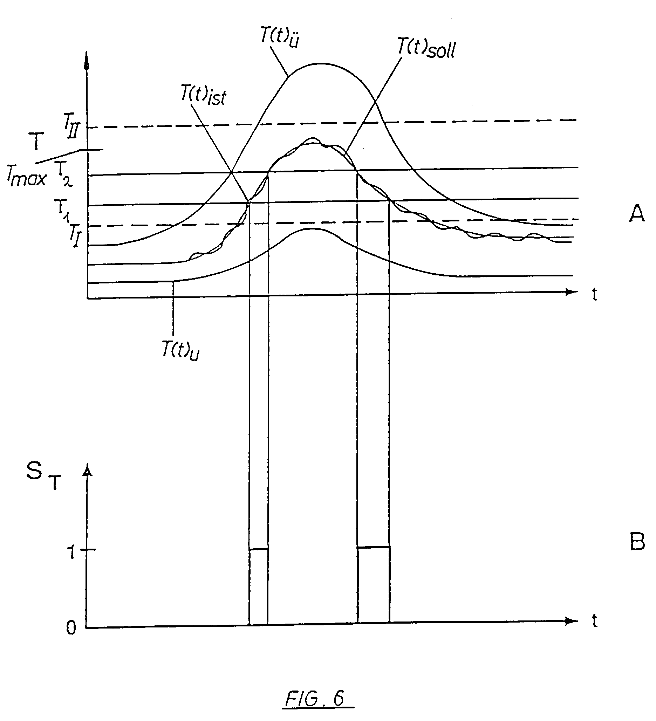

Das vom Sensor 13 ermittelte Temperatursignal T(t) wird über eine Leitung 14 einerseits einer Lasersteuer- und -regeleinheit 25 zugeführt sowie andererseits einer Vergleichseinheit 17. Fig.6,A zeigt mit T=f(t) verschiedene Verläufe T(t). Jeder Verlauf ist von einem Laserimpuls initiiert. Der Verlauf T(t)ᵤ zeigt eine nur verhältnismäßig flache Ausprägung des Temperaturverlaufs, während T(t)_{ü} eine sehr große Ausprägung zeigt. Es kann nun definiert werden, daß Tₘₐₓ als maximale Temperatur innerhalb eines Sollwertbereichs von T_{I} bis T_{II} liegen muß, um eine ordnungsgemäße Messung durchführen zu können. Mit Hilfe der Lasersteuer-und -regeleinheit 25 kann also erreicht werden, daß sich der Maximalwert Tₘₐₓ des Plasmaparameters Temperatur in einem Sollwertbereich T_{I}./.T_{II} bewegt, indem ein Vergleich durchgeführt wird, und indem dem Vergleichsergebnis entsprechend Einfluß auf die Energie der Laserstrahlung 2 genommen wird, wozu die Einheit 25 über eine Leitung 26 auf den Laser 1 einwirkt und dort z.B. die Ladespannung der Kondensatorbatterie entsprechend ändert. Die Änderung erfolgt so, daß für den nächsten Laserimpuls die Energie der Laserstrahlung um einen vorzugebenden Betrag erhöht wird, wenn Tₘₐₓ<T_{I} ist. Falls Tₘₐₓ>T_{II} ist, so wird für den nächsten Laserimpuls die Energie der Laserstrahlung um einen vorzugebenden Betrag vermindert. Für T_{I}<Tₘₐₓ<T_{II} wird beim nächsten Laserimpuls die gleiche Energie der Laserstrahlung 2 gewählt. Um zu einer schnellen Steuerung zu kommen, können auch Steuerstrategien bei Laserpulsfolgen verfolgt werden, die eine schnelle Anpassung an die erforderliche Laserimpulsenergie gestatten.

Die Daten für den Sollwertbereich T_{I}./.T_{II} erhält die Einheit 25 über eine Leitung 15 für die Meßvorgänge i=1, 2... N von der Zentraleinheit 23 zugeführt, wo sie vorprogrammiert vorhanden sein können und in Abhängigkeit z.B. von der Taktfolge des Meßergebnisses des Sensors 13 über die Vergleichseinheit 17 und eine Taktleitung 43 zur Zentraleinheit 23 abgerufen werden.

Die Steuer- und -regeleinheit 25 kann aber auch noch auf andere Weise dazu benutzt werden, definierte Plasmazustände zu erzwingen. In Fig.6,A ist ein Parametersollverlauf T(t)ₛₒₗₗ dargestellt, der aus den weiter unten beschriebenen Gründen möglichst genau erreicht werden soll. Hierzu wird der effektiv vom Sensor 13 ermittelte Verlauf T(t)ᵢₛₜ bestimmt und mit dem durch die Zentraleinheit 23 vorzugebenden Verlauf T(t)ₛₒₗₗ verglichen. Entsprechend diesem Vergleich wird im Falle T(t)ᵢₛₜ - T(t)ₛₒₗₗ ungleich Null eine Regelgröße erzeugt, mit der der Laserpulsverlauf so beeinflußt wird, daß sich der tatsächliche Temperaturverlauf T(t)ᵢₛₜ im Plasma dem Sollverlauf T(t)ₛₒₗₗ möglichst anpaßt. Während also bei der Lasersteuerung der bei der Messung nächstfolgende Puls beeinflußt wird, wird bei der Laserregelung derselbe, das Meßergebnis bedingende Puls während seines Verlaufs im erforderlichen Maße abgeändert. Die Abänderung erfolgt beispielsweise über eine resonatorinterne Gütemodulation innerhalb einer Blitzlampenentladung.

Nachdem beschrieben wurde, wie erreicht werden kann, daß T(t) einen bestimmten Verlauf hat, so daß also unter Verwendung eines emissionsbeeinflussenden Parameters ein definierter Plasmazustand erreicht wird, wird im Folgenden die Einflußnahme auf den Transfer des von dem Spektrometer 10 ermittelten Spektrums zur Verarbeitungseinrichtung 31 beschrieben. Dabei wird davon ausgegangen, daß der Zeitpunkt des Transfers dann gekommen ist, wenn sich das jeweilige Emissionsspektrum des laserinduzierten Plasmas innerhalb eines vorbestimmten Toleranzbereichs des fortlaufend gemessenen Plasmaparameters befindet, also beispielsweise innerhalb eines vorbestimmten Temperaturbereichs T₁./.T₂. Denn für den Fall T₁<T<T₂ kann man feststellen, beispielsweise in einer Einmeßphase, daß sich das jeweilige Emissionsspektrum für die quantitative Konzentrationsbestimmung eines Elements oder einer Elementgruppe besonders eignet. Dieser Toleranzbereich T₁./.T₂ ist in Fig.6,A dargestellt. Die Vergleichseinheit 17 erhält während der Messung von der Zentraleinheit 23 über die Leitung 22 die Vorgabe dieses Toleranzbereichs T₁./.T₂ und kann so unter Verwertung des Meßergebnisses ein Signal S_{T} erzeugen, das in Fig.6,B dargestellt ist. Dieses Signal S_{T} wird über eine Leitung 19 einem Pulser 20 zugeführt, der den elektrooptischen Verschluß 11 über die Verbindungsleitung 21 je nach dem Zustand des Signals S(t) öffnet oder schließt. Mit dem Pulser 20 wird gleichzeitig eine Verzögerungs- und Steuereinheit 28 getriggert, die über die Leitung 29 den Auslesevorgang des Detektors 12 beeinflußt. Die Verzögerung richtet sich nach den systemimmanenten Verzögerungen, die insbesondere durch den elektrooptischen Verschluß 11 bedingt sind.

Aus Fig.6,B ist ersichtlich, daß sich der emissionsbeeinflussende Parameter, also die Temperatur, zweimal während eines Temperaturverlaufs T(t) im vorbestimmten Toleranzbereich T₁./.T₂ befindet. Es können also während eines einzigen impulsinduzierten Verlaufs T(t) in einem einzigen Plasma zwei Transfers der ermittelten Spektren zur Verarbeitungseinrichtung 31 durchgeführt werden, was die Genauigkeit bezüglich eines einzigen Meßvorgangs steigert.

Die vom Plasma emittierte Strahlung ist außer von der Temperatur noch von weiteren Plasmaparametern abhängig, beispielsweise von dem zeitabhängigen Verlauf der Dichte N(t) und/oder einer zeitabhängigen Ausbildung der Plasmageometrie. Derartige Plasmaparameter können mit entsprechenden Sensoren erfaßt werden, die Dichte beispielsweise mit einem Dichtesensor, der als Interferometer ausgebildet ist, oder indem spektroskopisch die Breite der Emissionslinien ermittelt wird, die ebenfalls von der Plasmadichte abhängt.

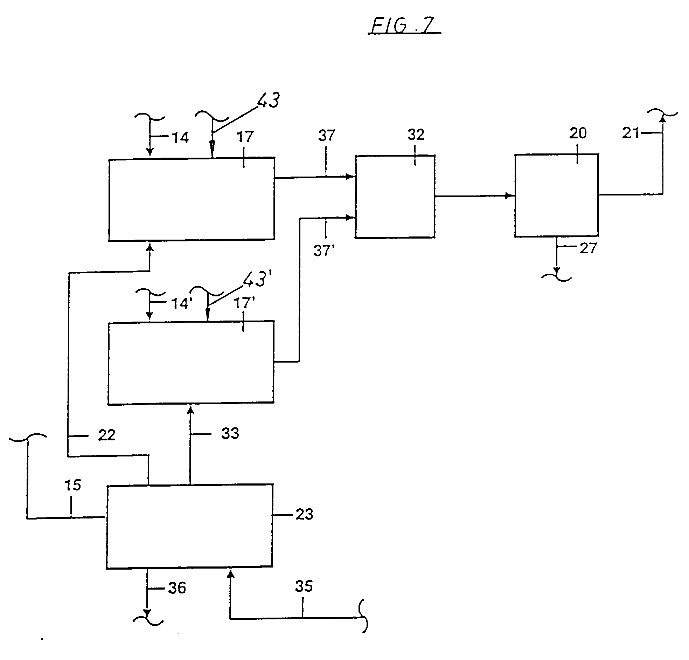

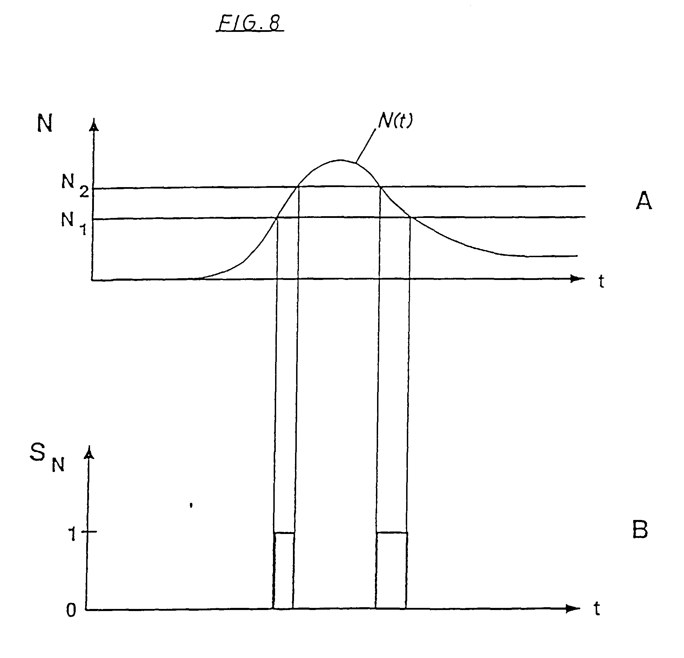

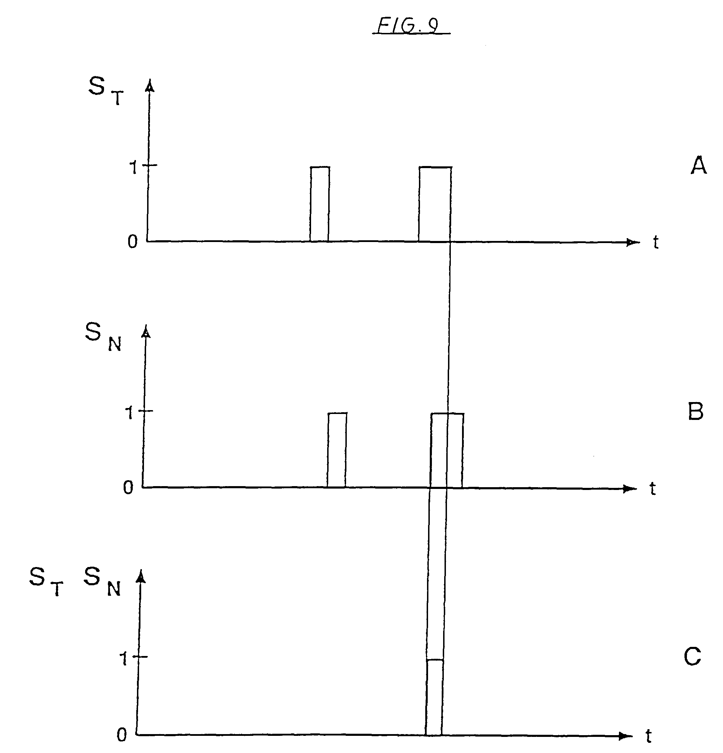

Fig.7 veranschaulicht die schaltungsmäßige Ausgestaltung einer Vorrichtung, bei der der Verlauf N(t) zusätzlich berücksichtigt wird. Danach ist eine zusätzliche Vergleichseinheit 17' vorhanden, die das Dichtesignal N(t) über einen Leiter 14' erhält, der beispielsweise ein Abzweigleiter des Leiters 14 ist. Der Verlauf N(t) ist in Fig.8,A dargestellt. In analoger Weise zu Fig.6 wird ein vorbestimmter Toleranzbereich N₁./.N₂ für die Messung berücksichtigt, wozu die Vergleichseinheit 17' die betreffenden Grenzwerte N₁,N₂ des Toleranzbereichs von der Zentraleinheit 23 über die Leitung 33 erhält. Solange das Plasma eine Dichte innerhalb dieses Toleranzbereichs N₁./.N₂ aufweist, wird ein Signal SN erzeugt, bei dem vorliegenden Fall zweimal im Verlauf eines einzigen Laserpulses. Dieses Signal SN wird über eine Leitung 37' einem Multiplizierer 32 zugeführt, der gemäß Fig.9,C ein Ausgangssignal erzeugt, wenn sowohl das Signal ST gemäß Fig.9,A vorliegt, als auch ein Signal S_{N} gemäß Fig.9. Das Ausgangssignal des Multiplizierers 32 veranlaßt den Pulser 20 zu den vorbeschriebenen Funktionen. Durch die Verwendung mehrerer Plasmaparameter, wie die Temperatur und die Dichte, kann erreicht werden, daß das emittierende Plasma noch viel sicherer ausgewertet werden kann, nämlich dann, wenn seine Strahlung für eine insbesondere quantitative Analyse optimal ist.

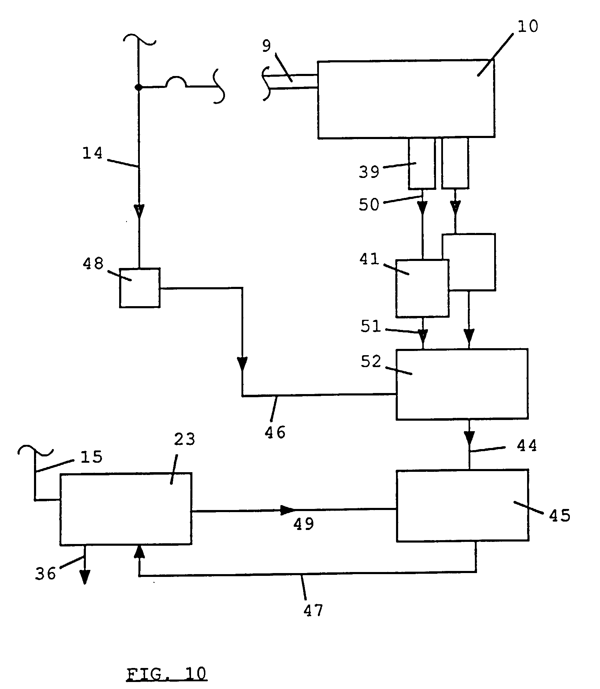

Während bisher insbesondere mit Bezug auf Fig.5 der Transfer des vom Spektrometer 10 ermittelten Spektrums zur Verarbeitungseinrichtung 31 mittels der Transfereinrichtung 11,12, also mittels eines elektrooptischen Verschlusses 11 mit nachgeschaltetem flächen- bzw. linienweise wirkenden Detektor 12 beschrieben wurde, betrifft Fig.10 insbesondere den Transfer eines Teils des vom Spektrometer 10 ermittelten Spektrums eines Plasmas. Hierzu sind an dem nicht näher dargestellten Ausgang des Spektrometers 10 Schlitzblenden an vorbestimmten Positionen angeordnet, denen jeweils eine Anzahl von diskreten Detektoren 39 nachangeordnet sind. Die Detektoren sind so positioniert, daß sie jeweils eine ausgewählte Elementlinie oder ein bestimmtes Untergrundsignal registrieren. Es sind mindestens soviele Detektoren 39 vorhanden, wie verschiedene Elemente zu bestimmen sind. Die Bandbreite der Detektoren 39 ist so zu wählen, daß sie den zeitlichen Änderungen der Emission folgen können. Die Signale jeden Detektors 39 werden über Leitungen 50 zu schnellen A/D-Wandlern 41 geführt, von denen Digitalsignale jedes Detektorkanals über eine Leitung 51 zu einem alle Digitalsignale aufnehmenden Speicher 52 gelangen. Der Speicher 52 zeichnet die Signale in Abhängigkeit von der Zeit auf.

Um einen oder mehrere Plasmaparameter bei einer Auswertung der im Speicher 52 aufgezeichneten Abhängigkeiten berücksichtigen zu können, muß der zeitliche Verlauf des Plasmaparameters bzw. mehrerer Parameter erfaßt werden. Das geschieht gemäß Fig.10 über die Leitung 14, die das Signal des Plasmaparametersensors 13 zu einem A/D-Wandler 48 führt, der den digitalisierten zeitlichen Verlauf des Plasmaparameters zur Abspeicherung im Speicher 52 über eine Leitung 46 abgibt. Die Abspeicherung erfolgt dergestalt, daß eine eindeutige zeitliche Zuordnung zwischen dem zeitlichen Verlauf des Plasmaparameters oder mehrerer Plasmaparameter und den zeitlichen Verläufen der Signale der Detektoren 39 hergestellt werden kann.

Die quantitative Auswertung der digitalisierten zeitlichen Verläufe von Plasmaparametern und Emissionsintensitäten für die vorbestimmten Emissionslinien übernimmt die dem Speicher 52 über eine Verbindungsleitung 44 nachgeschaltete Verarbeitungseinrichtung 45. Sie ermittelt aus den im Speicher 52 gespeicherten Daten des zeitlichen Verlaufs eines Plasmaparameters, z.B. T(t), diejenigen Zeitintervalle, in denen T(t) innerhalb des vorbestimmten Toleranzbereichs T₁./.T₂ liegt. Diese Funktion entspricht derjenigen der Vergleichseinheit 17 gemäß Fig.5. Der vorbestimmte Toleranzbereich T₁./.T₂ wird durch die Verarbeitungseinrichtung 45 von der Zentraleinheit 23 über die Leitung 49 übernommen und gilt für eine oder mehrere der vorbestimmten Emissionslinien. Nach der Bestimmung der Zeitintervalle werden die im Speicher 52 für diese Intervalle vorliegenden Signale der Detektoren 39 in die Verarbeitungseinheit 45 eingelesen. Die eingelesenen Daten werden auf herkömmliche Art und Weise ausgewertet, beispielsweise durch Bildung von Linienverhältnissen mit Untergrundkorrektur und Bestimmung von Konzentrationen über Kalibrierkurven.

Der zeitliche Ablauf der Auswertung kann unterschiedlich sein. Beispielsweise kann eine zeitliche Auswertung nach jedem Laserpuls vorgenommen werden, wenn die Daten des Plasmaparameters des Sensors 13 und der Detektoren 39 gespeichert vorliegen. Sie werden gleich anschließend in der oben beschriebenen Weise für die quantitative Bestimmung eines Elements oder mehrerer Elemente ausgewertet, wobei im Grenzfall für jedes zu bestimmende Element andere vorbestimmte Grenzen von einem oder mehreren Plasmaparametern verwendet werden. Die zeitliche Auswertung kann aber auch nach mehreren Laserpulsen vorgenommen werden, indem die Signale des Sensors 13 und der Detektoren 39 für mehrere Pulse gespeichert und erst nach einer vorbestimmten Zeit wie beschrieben ausgewertet werden.

Die Auswertungsergebnisse werden von der Auswertungseinrichtung 45 über eine Leitung 47 auf die Zentraleinheit 23 übertragen, von der aus sie beispielsweise über die Leitung 36 abgegeben werden. Die Zentraleinheit 23 ist außerdem über eine Leitung 15, wie beschrieben, mit einer Steuer- und -regeleinheit verbunden.

## Patentansprüche

1. Verfahren für die Emissionsspektroskopie, insbesondere die Laser-Emissionsspektroskopie, bei dem die von laserinduziertem Plasma des zu analysierenden Werkstoffs emittierte Strahlung (40) von einem Spektrometer (10) zerlegt und zumindest ein Teil des ermittelten Spektrums einer Verarbeitungseinrichtung (31,45) zur Elementanalyse transferiert wird, **dadurch gekennzeichnet**, daß eine Beeinflussung der Intensität der plasmabildenden Laserstrahlung (2) zur Erzeugung definierter Plasmazustände in Abhängigkeit von zumindest einem emissionsbeeinflussenden Parameter erfolgt, der während der Plasmabildung gemessen wird, und daß der Transfer des ermittelten Spektrums oder eines Teils desselben zur Verarbeitungseinrichtung (31,45) durchgeführt wird, sofern sich der gemessene Plasmaparameter innerhalb eines vorbestimmten Toleranzbereichs (T₁./.T₂) befindet.

2. Verfahren nach Anspruch 1, **dadurch gekennzeichnet**, daß als Plasmaparameter die Plasmatemperatur (T(t)) verwendet wird.

3. Verfahren nach Anspruch 2, **dadurch gekennzeichnet**, daß ergänzend zur Plasmatemperatur (T(t)) auch die Plasmadichte (N(t)) als Plasmaparameter verwendet wird.

4. Verfahren nach einem oder mehreren der Ansprüche 1 bis 3, **dadurch gekennzeichnet**, daß der Maximalwert (Tₘₐₓ) eines Parameters eines impulsweise induzierten Plasmas (6) gemessen wird, daß dieser Maximalwert (Tₘₐₓ) als Ist-Wert mit einem Sollwertbereich (T_{I}./.T_{II}) verglichen wird, und daß die Energie des nächstfolgenden Laserpulses erhöht oder gesenkt wird, wenn der Maximalwert (Tₘₐₓ) unterhalb oder oberhalb des Sollwertbereichs (T_{I}./.T_{II}) liegt.

5. Verfahren nach einem oder mehreren der Ansprüche 1 bis 4, **dadurch gekennzeichnet**, daß eine kontinuierliche Messung des Parameterverlaufs eines impulsweise induzierten Plasmas (6) erfolgt, daß dieser Parameteristverlauf (T(t)ᵢₛₜ) kontinuierlich mit einem Parametersollverlauf (T(t)ₛₒₗₗ) verglichen wird, und daß im Abweichungsfall differenzbedingte Regelgrößen erzeugt und für eine kontinuierliche Regelung der Energie des Laserstrahls herangezogen werden.

6. Verfahren nach einem oder mehreren der Ansprüche 1 bis 5, **dadurch gekennzeichnet**, daß der Sollwertbereich (T_{I}./.T_{II}) und/oder der Parametersollverlauf (T(t)ₛₒₗₗ) spezifisch für ein zu analysierendes Element oder für eine Elementengruppe vorgegeben werden.

7. Verfahren nach einem oder mehreren der Ansprüche 1 bis 6, **dadurch gekennzeichnet**, daß dem Spektrometer (10) und dem Parametersensor (13) emittierte Strahlung aus demselben Quellbereich des Plasmas (6) zugeführt wird.

8. Verfahren nach einem oder mehreren der Ansprüche 1 bis 7, **dadurch gekennzeichnet**, daß dem Ergebnis der plasmaparameterabhängig durchgeführten Elementanalyse entsprechend eine Prozeßsteuerung des zugehörigen Werkstücks erfolgt.

9. Verfahren nach einem oder mehreren der Ansprüche 1 bis 8, **dadurch gekennzeichnet**, daß die Emissionsintensität einer Anzahl vorbestimmter Emissionslinien des ermittelten Spektrums und auch mindestens ein Plasmaparameter in Abhängigkeit von der Zeit registriert werden, bevor der Transfer zur Verarbeitungseinrichtung (45) in Abhängigkeit von dem vorbestimmten Toleranzbereich (T₁./.T₂) erfolgt.

10. Vorrichtung zur Durchführung des Verfahrens nach einem der Ansprüche 1 bis 9, mit einem Laser (1), dessen Laserstrahlung (2) zu analysierendes Werkstoffplasma (6) erzeugt, mit einer das Werkstoffplasma beobachtenden Meßoptik (8), die ein Spektrometer (10) beaufschlagt, mit einem von der emittierten Strahlung (40) des Plasmas (6) beaufschlagten Plasmaparametersensor (13), und mit einer die Intensität der plasmabildenden Laserstrahlung beeinflussenden Lasersteuer- und Regeleinheit (25), die an den Plasmaparametersensor (13) angeschlossen ist, **dadurch gekennzeichnet**, daß die Lasersteuer- und Regeleinheit (25) zur Erzeugung definierter Plasmazustände in Abhängigkeit von dem emissionsbeeinflussenden Plasmaparameter mit einer Werte eines Sollwertbereichs (T_{I}./.T_{II}) und eines Parameterverlaufs (T(t)ₛₒₗₗ) übermittelnden Zentraleinheit (23) verbunden ist.

11. Vorrichtung nach Anspruch 10, **dadurch gekennzeichnet**, daß ein im Strahlengang der Laserstrahlung (2) angeordneter, vom Plasma (6) emittierte Strahlung (40) erfassender und laserstrahlungsdurchlässiger Ausblendspiegel (42) vorhanden ist, der optisch an das Spektrometer (10) und an den Plasmaparametersensor (13) angeschlossen ist.

12. Vorrichtung nach Anspruch 10, **dadurch gekennzeichnet**, daß die Meßoptik (8) das Plasma (6) direkt beobachtet und der Plasmaparametersensor (13) in den Strahlengang der Meßoptik (8) über einen Spiegel (38) eingekoppelt ist.

13. Vorrichtung nach einem der Ansprüche 10 bis 12, **dadurch gekennzeichnet**, daß die Meßoptik (8) über einen Lichtwellenleiter (9) mit dem Spektrometer (10) verbunden ist.

14. Vorrichtung nach Anspruch 11, **dadurch gekennzeichnet**, daß der Plasmaparametersensor (13) an eine Vergleichseinheit (17) angeschlossen ist, die Werte des Toleranz bereichs (T₁./.T₂) von der Zentraleinheit (23) vorgegeben erhält und mit der eine zwischen dem Spektrometer (10) und der Verarbeitungseinrichtung (31) angeordnete Transfereinheit (11,12) steuerbar ist.

15. Vorrichtung nach Anspruch 11, **dadurch gekennzeichnet**, daß der Plasmaparametersensor (13) an einen Speicher (52) angeschlossen ist, der mit dem Spektrometer (10) über eine Schlitzblende mit nachgeordnetem diskreten, jeweils auf eine einzige Emissionslinie oder ein Untergrundsignal des Spektrums abgestimmten Detektor (39) gekoppelt ist und der in Transferverbindung mit der Verarbeitungseinrichtung (45) steht, die die Werte des Toleranzbereichs (T₁./.T₂) von der Zentraleinheit (23) vorgegeben erhält.

## Claims

1. Method for emission spectroscopy, in particular laser-emission spectroscopy wherein the radiation beam (40) which is emitted by laser induced plasma of the material to be analysed is separated by a spectrometer (10) and at least a part of the spectrum found is transferred to a processing device (31, 45) for element analysis, characterised in that the intensity of the plasma-forming laser radiation beam (2) is influenced for the purpose of creating defined plasma conditions in dependence upon at least one parameter which influences emissions and is measured during the formation of plasma and that the spectrum found or a part thereof is transferred to the processing device (31, 45) if the measured plasma parameter is located within a predetermined tolerance range (T₁. / . T₂).

2. Method according to claim 1, characterised in that the plasma temperature (T(t)) is used as the parameter for the plasma.

3. Method according to claim 2, characterised in that in addition to the plasma temperature (T(t)) the density of the plasma (N(t)) is also used as a parameter for the plasma.

4. Method according to any one or several of the claims 1 to 3, characterised in that the maximum value (Tₘₐₓ) of a parameter of a plasma (6) induced by pulses is measured, that this maximum value (Tₘₐₓ) is compared as the actual value to a desired value range (T_{I}. / .T_{II}) and that the energy of the next laser pulse is increased or decreased if the maximum value (Tₘₐₓ) is below or above the desired value range (T_{I}. / .T_{II}).

5. Method according to any one or several of the claims 1 to 4, characterised in that the parameter progression of a plasma (6) induced by pulses is measured continuously, that this actual parameter progression (T(t)ᵢₛₜ) is compared in a continuous manner to a desired parameter progression (T(t)ₛₒₗₗ) and that, in the case of any deviation, regulating variables conditioned by differences are produced and used to control the energy of the laser radiation beam in a continuous manner.

6. Method according to any one or several of the claims 1 to 5, characterised in that the desired value range (T_{I}. / . T_{II}) and/or the desired parameter progression (T(t)ₛₒₗₗ) are predetermined specifically for an element which is to be analysed or for a group of elements.

7. Method according to any one or several of the claims 1 to 6, characterised in that the spectrometer (10) and the parameter sensor (13) are supplied with an emitted radiation beam from the same source region of the plasma (6).

8. Method according to any one or several of the claims 1 to 7, characterised in that corresponding to the result of the element analysis carried out in dependence upon the plasma parameters a process control of the associated work piece is performed.

9. Method according to any one or several of the claims 1 to 8, characterised in that the emission intensity of a number of predetermined emission lines of the spectrum found and also at least one plasma parameter are registered in dependence upon time before the transfer to the processing device (45) is performed in dependence upon the predetermined tolerance range (T₁. / . T₂).

10. Device for the purpose of carrying out the method according to any one of the claims 1 to 9, having a laser (1), the laser radiation beam (2) of which produces material plasma to be analysed, having a measuring optic (8) which monitors the material plasma and influences a spectrometer (10), having a plasma parameter sensor (13) which is influenced by the emitted radiation beam (40) of the plasma (6), and having a laser control and regulating unit (25) which influences the intensity of the plasma-forming laser radiation beam and is connected to the plasma parameter sensor (13), characterised in that the laser control and regulating unit (25), for the purpose of producing defined plasma conditions in dependence upon the plasma parameter which influences emissions, is connected to a central unit (23) which transmits values of a desired value range (T_{I}. / . T_{II}) and of a parameter progression (T(t)ₛₒₗₗ).

11. Device according to claim 10, characterised in that a blocking mirror (42) is provided which is disposed in the beam path of the laser radiation beam (2), detects the radiation beam (40) emitted by the plasma (6), allows through laser radiation beams and is optically connected to the spectrometer (10) and to the plasma parameter sensor (13).

12. Device according to claim 10, characterised in that the measuring optic (8) directly monitors the plasma (6) and the plasma parameter sensor (13) is coupled into the beam path (8) of the measuring optic (8) by way of a mirror (38).

13. Device according to any one of the claims 10 to 12, characterised in that the measuring optic (8) is connected to the spectrometer (10) by way of an optical wave guide (9).

14. Device according to claim 11, characterised in that the plasma parameter sensor (13) is connected to a comparison unit (17) which receives values of the tolerance range (T₁. / . T₂) as predetermined by the central unit and with which a transfer unit (11, 12), disposed between the spectrometer (10) and the processing device (31), can be controlled.

15. Device according to claim 11, characterised in that the plasma parameter sensor (13) is connected to a memory (52) which is coupled to the spectrometer (10) by way of a slit diaphragm with a discrete detector (39) which is disposed downstream and in each case tailored to suit a single emission line or a background signal of the spectrum and which memory is in a transfer connection with the processing device (45) which receives values of the tolerance range (T₁. / . T₂) as predetermined by the central unit (23).

## Revendications

1. Procédé pour la spectroscopie d'émission, en particulier pour la spectroscopie d'émission laser, selon lequel le rayonnement (40) émis par un plasma, induit par laser, de la matière à analyser est décomposé par un spectromètre (10) et une partie au moins du spectre déterminé est transférée vers un dispositif de traitement (31, 45) en vue d'une analyse élémentaire, **caractérisé** en ce qu'on influe sur l'intensité du rayonnement laser (2) formant le plasma en vue de générer des états de plasma définis, en fonction d'au moins un paramètre influant sur l'émission qui est mesuré pendant la formation du plasma, et en ce que le transfert du spectre déterminé ou d'une partie de celui-ci vers le dispositif de traitement (31, 45) a lieu dans la mesure où le paramètre de plasma mesuré se trouve à l'intérieur d'une marge de tolérance prédéfinie (T₁./.T₂).

2. Procédé selon la revendication 1, **caractérisé** en ce qu'on utilise comme paramètre de plasma la température de plasma (T(t)).

3. Procédé selon la revendication 2, **caractérisé** en ce qu'on utilise aussi comme paramètre de plasma, en complément de la température de plasma (T(t)), la densité de plasma (N(t)).

4. Procédé selon l'une au moins des revendications 1 à 3, **caractérisé** en ce que la valeur maximale (Tₘₐₓ) d'un paramètre d'un plasma (6) induit par impulsions est mesurée, en ce que cette valeur maximale (Tₘₐₓ) est comparée comme valeur réelle à une plage de valeurs théoriques (T_{I}./.T_{II}), et en ce que l'énergie de l'impulsion laser suivante est augmentée ou réduite si la valeur maximale (Tₘₐₓ) est située au-dessous ou au-dessus de la plage de valeurs théoriques (T_{I}./.T_{II}).

5. Procédé selon l'une au moins des revendications 1 à 4, **caractérisé** en ce que la courbe de paramètres d'un plasma (6) induit par impulsions est mesurée en continu, en ce que cette courbe réelle de paramètres (T(t)ᵢₛₜ) est comparée en continu à une courbe théorique de paramètres (T(t)ₛₒₗₗ), et en ce que, en cas de divergence, des grandeurs commandées qui sont fonction de la différence sont générées et utilisées pour régler en continu l'énergie du rayon laser.

6. Procédé selon l'une au moins des revendications 1 à 5, **caractérisé** en ce que la plage de valeurs théoriques (T_{I}./.T_{II}) et/ou la courbe théorique de paramètres (T(t)ₛₒₗₗ) sont prédéfinies spécifiquement pour un élément à analyser ou pour un groupe d'éléments.

7. Procédé selon l'une au moins des revendications 1 à 6, **caractérisé** en ce que le spectromètre (10) et le détecteur de paramètres (13) reçoivent un rayonnement émis qui provient de la même zone source du plasma (6).

8. Procédé selon l'une au moins des revendications 1 à 7, **caractérisé** en ce qu'une commande de procédé de la pièce à traiter associée a lieu en fonction du résultat de l'analyse élémentaire effectuée suivant les paramètres de plasma.

9. Procédé selon l'une au moins des revendications 1 à 8, **caractérisé** en ce que l'intensité d'émission d'un certain nombre de lignes d'émission prédéfinies du spectre déterminé, et au moins un paramètre de plasma sont enregistrés en fonction du temps avant le transfert vers le dispositif de traitement (45) en fonction de la marge de tolérance prédéfinie (T₁./.T₂).

10. Dispositif pour la mise en oeuvre du procédé selon l'une des revendications 1 à 9, comportant un laser (1) dont le rayonnement (2) génère un plasma de matière (6) à analyser, un système optique de mesure (8) qui observe le plasma de matière et qui sollicite un spectromètre (10), un détecteur de paramètres de plasma (13) sollicité par le rayonnement émis (40) du plasma (6), et une unité de commande laser et de réglage (25) qui influe sur l'intensité du rayonnement laser formant le plasma et qui est reliée au détecteur de paramètres de plasma (13), **caractérisé** en ce que l'unité de commande laser et de réglage (25) est reliée, en vue de générer des états de plasma définis en fonction du paramètre de plasma influant sur l'émission, à une unité centrale (23) qui transmet des valeurs d'une plage de valeurs théoriques (T_{I}./.T_{II}) et d'une courbe de paramètres (T(t)ₛₒₗₗ).

11. Dispositif selon la revendication 10, **caractérisé** en ce qu'il est prévu un miroir à diaphragmer (42) qui est disposé dans la trajectoire du rayonnement laser (2), qui détecte le rayonnement (40) émis par le plasma (6), qui laisse passer le rayonnement laser et qui est relié par voie optique au spectromètre (10) et au détecteur de paramètres de plasma (13).

12. Dispositif selon la revendication 10, **caractérisé** en ce que le système optique de mesure (8) observe directement le plasma (6), et le détecteur de paramètres de plasma (13) est couplé dans la trajectoire du système optique de mesure (8) par l'intermédiaire d'un miroir (38).

13. Dispositif selon l'une des revendications 10 à 12, **caractérisé** en ce que le système optique de mesure (8) est relié au spectromètre (10) par l'intermédiaire d'un guide d'ondes optique (9).

14. Dispositif selon la revendication 11, **caractérisé** en ce que le détecteur de paramètres de plasma (13) est relié à une unité de comparaison (17) qui reçoit de l'unité centrale (23) des valeurs prédéfinies de la marge de tolérances (T₁./.T₂) et grâce à laquelle une unité de transfert (11, 12) disposée entre le spectromètre (10) et le dispositif de traitement (31) est apte à être commandée.

15. Dispositif selon la revendication 11, **caractérisé** en ce que le détecteur de paramètres de plasma (13) est relié à une mémoire (52) qui est couplée avec le spectromètre (10) par l'intermédiaire d'un diaphragme à fente en aval duquel est monté un détecteur discret (39) adapté à chaque fois à une seule ligne d'émission ou à un signal inférieur du spectre, et qui est en relation de transfert avec le dispositif de traitement (45) qui reçoit de l'unité centrale (23) les valeurs prédéfinies de la marge de tolérance (T₁./.T₂).
